# EUROPÄISCHE PATENTANMELDUNG

(11) **EP 0 706 123 A2**
(43) Veröffentlichungstag der Anmeldung: **10.04.1996**
(21) Anmeldenummer: 95115093.7
(22) Anmeldetag: 25.09.1995
(51) Int. Cl.: G06F 9/40, G06F 9/46

(54) **Programmbearbeitungssystem**

(30) Priorität: 04.10.1994 DE 4435456
(71) Anmelder: SIEMENS AKTIENGESELLSCHAFT, D-80333 München (DE)
(72) Erfinder: Huber, Karl-Heinz, D-76872 Freckenfeld (DE)

(57) **Zusammenfassung**

Es wird ein Programmbearbeitungssystem (1) vorgeschlagen, welches Programmen (3, 6) Funktionen eines Funktionspaketes (5) ereignisgesteuert und/oder durch Funktionsaufrufe (F1, F2) im Programm (3, 6) bereitstellt. Dadurch, daß die Ereignisse und/oder die Funktionsaufrufe (F1, F2) einem zentralen Server-Baustein (2) zuführbar sind, wird eine einfache Schnittstelle zwischen den Programmen und den Funktionen des Funktionspaketes geschaffen. Routinen zur Lösung zentraler Aufgaben sind dadurch einfach zu implementieren.

Die Erfindung wird angewandt in Prozeßleitsystemen.

## Beschreibung

Die Erfindung betrifft ein Programmbearbeitungssystem, welches Programmen Funktionen eines Funktionspaketes ereignisgesteuert und/oder durch Funktionsaufrufe im Programm bereitstellt.

In der Benutzeranleitung "TELEPERM M, BATCH X, Programmsystem zur Automatisierung von Batch-Prozessen", Kapitel 2, Ausgabe 1993, ist eine Software einer sogenannten Betriebsleitebene eines Prozeßleitsystems beschrieben. Diese Software umfaßt mehrere Programme, z. B. ein Programm für eine geeignete Bedieneroberfläche, eine Rezeptbearbeitung, eine Produktionsrezeptbildung, eine Chargenplanung oder für eine Bibliotheksverwaltung. Die Programme greifen auf Funktionen eines Funktionspakets zu, welche das Programmsystem ereignisgesteuert, z. B. durch Drücken einer Taste auf einer Tastatur, oder durch entsprechende Funktionsaufrufe in den Programmen den jeweiligen Programmen bereitstellt. Dabei greifen die Programme durch diese Aufrufstellen direkt auf die Funktionen zu, was bedeutet, daß eine direkte Anbindung der Funktionen an die entsprechenden Funktionsaufrufstellen besteht. Sind z. B. in den Programmen dieser Betriebsleitebene n Funktionsaufrufstellen zum Aufruf von m Funktionen vorgesehen, so sind n Anbindungen erforderlich. Dadurch ist es nur mit erheblichem Programmieraufwand möglich, zentrale Aufgaben, z. B. die Prüfung einer Zugriffsberechtigung, zu implementieren, da eine entsprechende Zugriffsberechtigungs-Routine für jede Aufrufstelle vorgesehen werden muß.

Der vorliegenden Erfindung liegt die Aufgabe zugrunde, ein Programmbearbeitungssystem der eingangs genannten Art zu schaffen, in welches Routinen zur Lösung zentraler Aufgaben einfach implementierbar sind.

Diese Aufgabe wird erfindungsgemäß dadurch gelöst, daß die Ereignisse und/oder die Funktionsaufrufe einem zentralen Server-Baustein zuführbar sind, welcher die Funktionen aktiviert und in welchem Routinen zur Lösung zentraler Aufgaben hinterlegt sind.

Durch den zentralen Server-Baustein wird eine einheitliche Schnittstelle zwischen den Aufrufstellen eines Anwenderprogramms und den Funktionen geschaffen. Alle Aufrufe führen über diesen Server und beauftragen diesen, bestimmte Funktionen auszuführen. Dazu kann eine Funktion durch einen bestimmten Identifikator bestimmt werden, und der Server-Baustein weist eine Funktionsverwaltung auf, welche diesen Identifikator dieser Funktion und beliebigen Funktionsattributen zuordnet.
Im Server-Baustein sind z. B. Routinen zur Prüfung einer benutzer- oder lizenzspezifischen sowie einer statusbezogenen Ausführungsberechtigung der aufzurufenden Funktion hinterlegt. Auch kann der Server-Baustein ausgebildet sein zur Steuerung der Form eines auf einer Anzeigeeinheit des Programmbearbeitungssystems darstellbaren Cursors, zur chronologischen Aufzeichnung von Funktionsaufrufen, als Test- und Diagnoseschnittstelle oder als Server für verteilte Systeme.
Dadurch, daß die Aufrufstellen von den Funktionen entkoppelt sind und über den zentralen Server-Baustein geführt sind, ist das Programmbearbeitungssystem leicht um weitere Routinen erweiterbar, um zusätzliche zentrale Aufgaben zu lösen. Darüber hinaus kann der Server-Baustein mehrere kaskadierbare Teilbausteine umfassen, wodurch das Programmbearbeitungssystem mit einer übersichtlichen und strukturierbaren Schnittstelle versehen werden kann. Das System ist im Hinblick auf die implementierten bzw. zu implementierenden Routinen flexibel und an spezifische Anwendererfordernisse anpassungsfähig, leicht zu warten und zu testen.
Das erfindungsgemäße Programmbearbeitungssystem ist insbesondere in einem Prozeßleitsystem mit einer Betriebsleitebene einsetzbar, welche über einen Bus mit einer Bedien- und Beobachtungs- sowie eine Automatisierungsebene verbunden ist.

Anhand der Zeichnung, in der Ausführungsbeispiele der Erfindung veranschaulicht sind, werden im folgenden die Erfindung, deren Ausgestaltungen sowie Vorteile näher erläutert.

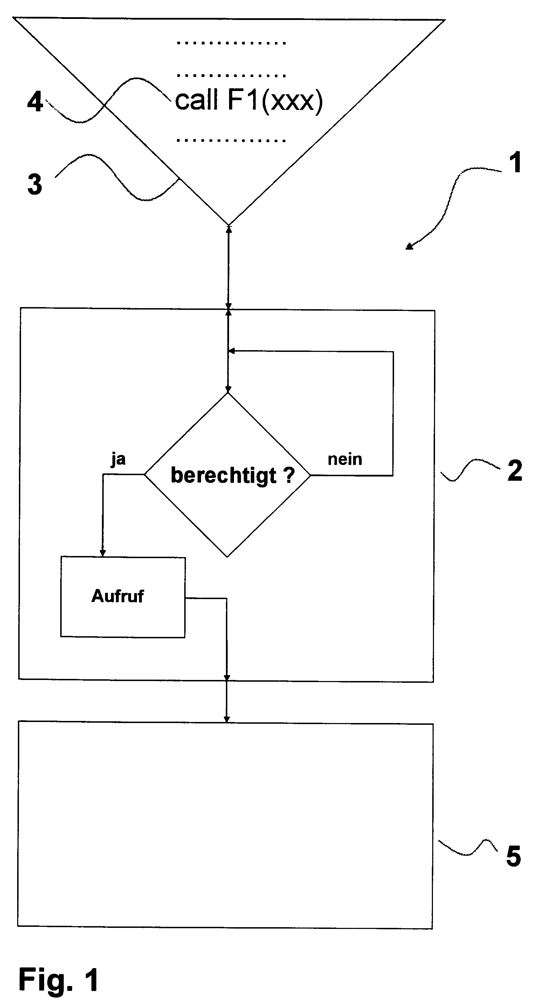

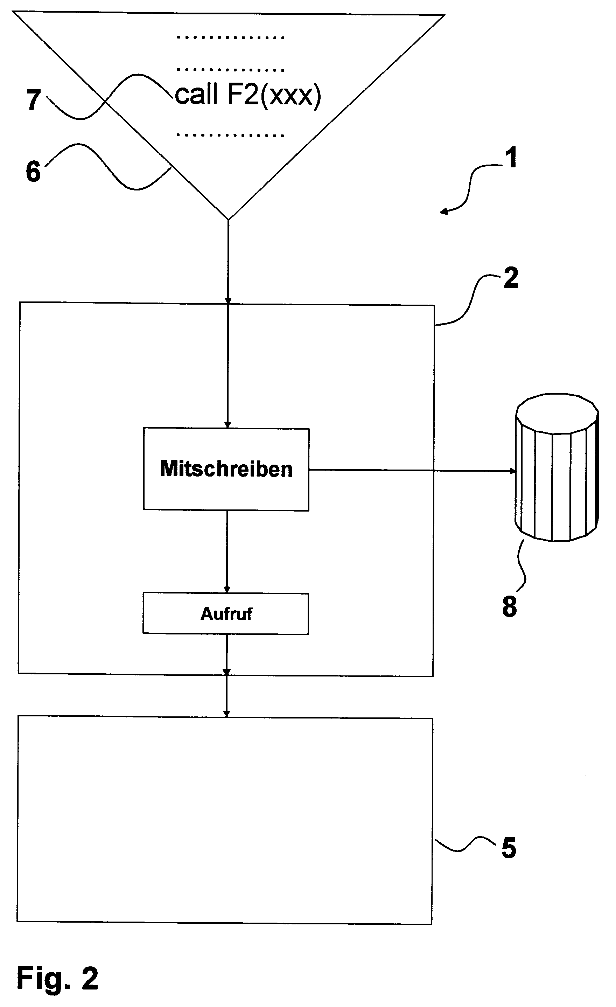

In Figur 1 und 2 ist schematisch ein Programmbearbeitungssystem 1 mit einem Server-Baustein 2 dargestellt, in welchem Routinen zur Lösung zentraler Aufgaben hinterlegt sind. Die in den Figuren 1 und 2 gleichen Teile sind mit gleichen Bezugszeichen versehen. Eine Routine ist zur Prüfung einer benutzerspezifischen Ausführungsberechtigung (Figur 1) und eine weitere Routine zum Mitschreiben von Bedienungen (Figur 2) am Programmbearbeitungssystem vorgesehen.

Es ist angenommen, daß das Programmbearbeitungssystem 1 ein Programm 3 (Figur 1) bearbeitet, welches an einer Programmstelle mit einer Anweisung 4 versehen ist, die einen Aufruf F1 für einen Zugriff auf eine Funktion eines Funktionspaketes 5 umfaßt. Dieser Funktionsaufruf F1, der um beliebige Funktionsattribute ergänzt sein kann (in der Figur mit xxx gekennzeichnet), bewirkt keinen direkten Aufruf dieser Funktion, sondern das Programmbearbeitungssystem 1 aktiviert zunächst den Server-Baustein 2. Dieser weist eine Funktionsverwaltung mit einer Zuordnung des Aufrufes F1 mit der entsprechenden Funktion und der Routine zur Prüfung der benutzerspezifischen Ausführungsberechtigung auf. Vor dem Aufruf der gewünschten Funktion startet der Server-Baustein 2 diese Routine und fordert den Bediener auf, z. B. seine User-Kennung über die Tastatur des Programmbearbeitungssystems 1 einzugeben. Nur für den Fall, daß eine Zugriffsberechtigung auf die dem Aufruf F1 zugeordnete Funktion vorliegt, d. h. für den Fall, daß die eingegebene User-Kennung mit der im Server-Baustein 2 hinterlegten übereinstimmt, startet der Server-Baustein 2 die Funktion.

Es ist nun angenommen, daß das Programmbearbeitungssystem 1 ein Programm 6 (Figur 2) bearbeitet, welches an einer Programmstelle mit einer einen Funktionsaufruf F2 umfassenden Anweisung 6 versehen ist. Dieser Funktionsaufruf F2 bewirkt ebenfalls keinen direkten Aufruf dieser Funktion, sondern das Programmbearbeitungssystem 1 aktiviert wiederum zunächst den Server-Baustein 2, dessen Funktionsverwaltung erkennt, daß ab diesem Zeitpunkt alle Ereignisse in Form von Bedienungen, z. B. alle Tastatureingaben, auf einem Speichermedium 8 zu hinterlegen sind (Trace-Funktion). Erst nachdem die entsprechende Mitschreib-Routine angestoßen wurde, startet der Server-Baustein 2 die dem Aufruf F2 zugeordnete Funktion des Funktionspakets 5.

## Patentansprüche

1. Programmbearbeitungssystem (1), welches Programmen (3, 6) Funktionen eines Funktionspaketes (5) ereignisgesteuert und/oder durch Funktionsaufrufe (F1, F2) im Programm (3, 6) bereitstellt, **dadurch gekennzeichnet,** daß die Ereignisse und/oder die Funktionsaufrufe (F1, F2) einem zentralen Server-Baustein (2) zuführbar sind, welcher die Funktionen aktiviert und in welchem Routinen zur Lösung zentraler Aufgaben hinterlegt sind.

2. Programmbearbeitungssystem nach Anspruch 1, **dadurch gekennzeichnet,** daß der Server-Baustein (2) mehrere kaskadierbare Teilbausteine umfaßt.

3. Programmbearbeitungssystem nach Anspruch 1 oder 2, **dadurch gekennzeichnet,** daß der Server-Baustein (2) um weitere Routinen erweiterbar ist.

4. Programmbearbeitungssystem nach einem der Ansprüche 1 bis 3, **dadurch gekennzeichnet,** daß im Server-Baustein (2) eine Routine zur Prüfung einer benutzer- und/oder lizenzspezifischen und/oder einer statusbezogenen Ausführungsberechtigung hinterlegt ist.

5. Programmbearbeitungssystem nach einem der Ansprüche 1 bis 4, **dadurch gekennzeichnet,** daß im Server-Baustein (2) eine Routine zur Steuerung der Form eines auf einer Anzeigeeinheit des Programmbearbeitungssystems (1) darstellbaren Cursors und/oder zur chronologischen Aufzeichnung von Funktionsaufrufen (F1, F2) hinterlegt ist.

6. Programmbearbeitungssystem nach einem der Ansprüche 1 bis 5, **dadurch gekennzeichnet,** daß der Server-Baustein (2) als Test- und/oder Diagnoseschnittstelle und/oder als Server für verteilte Systeme ausgebildet ist.

7. Programmbearbeitungssystem nach einem der Ansprüche 1 bis 6, **dadurch gekennzeichnet,** daß der Server-Baustein (2) mit einer Funktionsverwaltung versehen ist, die jeder Funktion einen Identifikator zuordnet, mit welchem die Funktion durch die Programme über den Server abrufbar ist.

8. Prozeßleitsystem mit einem Programmbearbeitungssystem nach einem der Ansprüche 1 bis 7.
